(19)

Europäisches Patentamt

European Patent Office

Office européen des brevets

(11) **EP 4 481 919 A1**

(12) **EUROPEAN PATENT APPLICATION**
published in accordance with Art. 153(4) EPC

(43) Date of publication:
**25.12.2024 Bulletin 2024/52**

(21) Application number: **23815140.1**

(22) Date of filing: **29.05.2023**

(51) International Patent Classification (IPC):
**H01M 50/231** (2021.01)    **H01M 50/224** (2021.01)
**H01M 50/227** (2021.01)    **H01M 50/249** (2021.01)
**H01M 50/244** (2021.01)    **H01M 50/24** (2021.01)
**H01M 50/242** (2021.01)    **H01M 50/236** (2021.01)

(52) Cooperative Patent Classification (CPC):
**H01M 50/224; H01M 50/227; H01M 50/231;
H01M 50/236; H01M 50/24; H01M 50/242;
H01M 50/244; H01M 50/249;** Y02E 60/10

(86) International application number:
**PCT/CN2023/096818**

(87) International publication number:
**WO 2023/231960 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 CN 202210612280**

(71) Applicant: **BYD Company Limited
Shenzhen, Guangdong 518118 (CN)**

(72) Inventors:
• **TAN, Zhijia
Shenzhen, Guangdong 518118 (CN)**
• **WAN, Long
Shenzhen, Guangdong 518118 (CN)**
• **PENG, Qingbo
Shenzhen, Guangdong 518118 (CN)**
• **WANG, Ran
Shenzhen, Guangdong 518118 (CN)**
• **SUN, Zenan
Shenzhen, Guangdong 518118 (CN)**

(74) Representative: **Dehns Germany Partnerschaft
mbB
Theresienstraße 6-8
80333 München (DE)**

(54) **BATTERY PROTECTION BOTTOM PLATE, BATTERY PACK COMPOSITE PROTECTION STRUCTURE, AND VEHICLE**

(57) In order to overcome the problem of the corrosion resistance of existing battery pack bottom protection plates being insufficient due to a surface PVC layer peeling under impact, the present application provides a battery protection bottom plate, comprising a protection layer, a metal plate and a fiber-reinforced resin layer. The metal plate is located between the protection layer and the fiber-reinforced resin layer, and the metal plate and the fiber-reinforced resin layer satisfy the condition in formula I.

$$0.4 \leq \frac{d1}{d2} * e^{-\frac{\varepsilon_0 * \sigma_2}{\sigma_0 * \varepsilon_2} + 0.5} \leq 2.0$$

In addition, further disclosed in the present application are a battery pack composite protection structure comprising the battery protection bottom plate, and a vehicle.

**EP 4 481 919 A1**

1

11

12

13

14

FIG. 1

**Description**

## CROSS REFERENCE TO RELATED APPLICATIONS

The present disclosure claims priority to and benefits of Chinese Patent Application No. 202210612280.6 filed on May 31, 2022. The entire content of the above-referenced application is incorporated herein by reference.

## FIELD

The present disclosure relates to the technical field of vehicle batteries, and specifically, to a battery protection bottom plate, a battery pack composite protection structure, and a vehicle.

## BACKGROUND

With the rapid development of electric vehicles, people's requirements for safety of electric vehicles are getting increasingly high. As a power battery pack is used as a power source of electric vehicles, the importance of safety of the power battery pack is self-evident. A battery pack is generally located on a lower portion of a chassis of the electric vehicle, and is connected to the chassis by a bolt. A lower surface of the battery pack is exposed outside. During daily driving of the vehicle, a bottom of the battery pack is susceptible to collision, which leads to case breakage and protection failure. Splash of stones at the bottom may also impact on the battery pack during driving. In order to cope with complex working conditions, a protection plate is usually arranged at the bottom of the battery pack, and the bottom of the battery pack is protected by the protection plate. The protection plate is usually a steel plate, and a PVC layer is sprayed on a bottom surface of the protection plate to resist impact and corrosion. However, overall impact resistance of an existing protection plate still needs to be improved. Specifically, under an impact of an external hard object, the PVC layer on the bottom surface of the protection plate is susceptible to chalking and therefore drops from a surface of the protection plate, and then the internal steel plate is exposed, which affects corrosion resistance of the protection plate.

## SUMMARY

Against the problem that a surface PVC layer of an existing battery pack bottom protection plate drops when subjected to an impact, which leads to insufficient corrosion resistance, the present disclosure provides a battery protection bottom plate, a battery pack composite protection structure, and a vehicle.
The technical solutions adopted by the present disclosure to solve the above technical problems are as follows.
In a first aspect, the present disclosure provides a battery protection bottom plate, including a protective layer, a metal plate, and a fiber reinforced resin layer. The metal plate is located between the protective plate and the fiber reinforced resin layer, and the metal plate and the fiber reinforced resin layer satisfy the following condition:

$$0.4 \le \frac{d1}{d2} * e^{-\frac{\varepsilon_0 * \sigma_2}{\sigma_0 * \varepsilon_2} + 0.5} \le 2.0 \,,$$

where $d_1$ is a thickness of the fiber reinforced resin layer in mm;
$d_2$ is a thickness of the metal plate in mm;
$\varepsilon_2$ is an elongation at break of the metal plate;
$\sigma_2$ is a tensile strength of the metal plate in MPa;
$\varepsilon_0$ is an elongation at break of the fiber reinforced resin layer; and
$\sigma_0$ is a tensile strength of the fiber reinforced resin layer in MPa.

In some implementations, the metal plate and the fiber reinforced resin layer satisfy the following condition:

$$0.5 \le \frac{d1}{d2} * e^{-\frac{\varepsilon_0 * \sigma_2}{\sigma_0 * \varepsilon_2} + 0.5} \le 1.8 \,.$$

In some implementations, the thickness di of the fiber reinforced resin layer ranges from 0.6 mm to 2.0 mm.
In some implementations, the thickness $d_2$ of the metal plate ranges from 0.7 mm to 1.6 mm.

In some implementations, the elongation $\varepsilon_2$ at break of the metal plate ranges from 5% to 20%.

In some implementations, the tensile strength $\sigma_2$ of the metal plate ranges from 590 MPa to 1180 MPa.

In some implementations, the elongation $\varepsilon_0$ at break of the fiber reinforced resin layer ranges from 2.5% to 8%.

In some implementations, the tensile strength $\sigma_0$ of the fiber reinforced resin layer ranges from 240 MPa to 380 MPa.

In some implementations, a material of the protective layer is selected from a fiber reinforced resin material, a resin coating or an electrophoretic coating.

In some implementations, a thickness of the protective layer ranges from 0.4 mm to 1.6 mm.

In some implementations, the battery protection bottom plate further includes a fiber reinforced resin frame. The metal plate and the fiber reinforced resin frame are located between the protective layer and the fiber reinforced resin layer, and the metal plate is located inside the fiber reinforced resin frame. A top surface of the fiber reinforced resin frame is integrally connected to the protective layer, and a bottom surface of the fiber reinforced resin frame is integrally connected to the fiber reinforced resin layer.

In some implementations, multiple mounting holes are spaced away in an inner side of an edge of the battery protection bottom plate, and the mounting holes sequentially run through the protective layer, the fiber reinforced resin frame and the fiber reinforced resin layer.

In some implementations, the protective layer, the fiber reinforced resin frame and the fiber reinforced resin layer each are independently selected from a glass fiber reinforced polyamide resin member, a glass fiber reinforced polypropylene resin member, a glass fiber reinforced polyethylene resin member, a glass fiber reinforced polycarbonate resin member or a glass fiber reinforced polystyrene resin member.

In some implementations, the protective layer, the fiber reinforced resin frame and the fiber reinforced resin layer each are a glass fiber reinforced resin member, the glass fiber reinforced resin member contains a glass fiber with a content ranging from 60% to 70%, and the glass fiber has an alkali content less than 0.8%.

In some implementations, the protective layer includes multiple layers of first fiber reinforced prepregs stacked with each other.

In some implementations, the fiber reinforced resin frame includes multiple layers of second fiber reinforced prepregs stacked with each other.

In some implementations, the fiber reinforced resin layer includes multiple layers of third fiber reinforced prepregs stacked with each other.

In some implementations, the metal plate is a steel plate, and a galvanized layer, a galvanized iron alloy layer or an electrophoretic paint protective layer is arranged at an outer surface of the steel plate.

In another aspect, the present disclosure provides a battery pack composite protection structure, including a battery pack and the battery protection bottom plate as described above. The battery protection bottom plate is arranged below the battery pack, and a buffer zone is formed between the battery pack and the battery protection bottom plate.

In some implementations, the buffer zone is filled with a buffer layer, and the buffer layer is selected from a honeycomb material or a rigid foam material.

In another aspect, the present disclosure provides a vehicle, including the battery protection bottom plate or the battery pack composite protection structure as described above.

In the battery protection bottom plate according to the present disclosure, a fiber reinforced resin layer is compounded on a surface of a metal plate, and the fiber reinforced resin layer is used as a bottom surface coating structure of the metal plate, so that the metal plate can be prevented from being in direct contact with air and external moisture, and the metal plate can be protected against corrosion. In addition, a fiber reinforced resin has good mechanical strength, so that stiffness and strength of the metal plate are effectively improved, and therefore the metal plate has higher impact resistance.

Further, the inventors have found that when fiber reinforced resin layers are matched with metal plates, a battery protection bottom plate with excellent impact resistance can be obtained in some matching groups, while the surface of a fiber reinforced resin layer is damaged in some matching groups. Through further experiments, it is found that the tensile strength and the elongation at break of a selected fiber reinforced resin layer need to have a certain corresponding relationship with the tensile strength and the elongation at break of the metal plate, so that adhesion between the fiber reinforced resin layer and the metal plate can be ensured without being damaged when the battery protection bottom plate is impacted by external energy. With reference to the thicknesses of the fiber reinforced resin layer and the metal plate, the following relationship is summarized:

$$0.4 \leq \frac{d1}{d2} * e^{-\frac{\varepsilon_0 * \sigma_2}{\sigma_0 * \varepsilon_2} + 0.5} \leq 2.0.$$

When the thickness di of the fiber reinforced resin layer, the thickness $d_2$ of the metal plate, the elongation $\varepsilon_2$ at break of the metal plate, the elongation $\varepsilon_0$ at break of the fiber reinforced resin layer, the tensile strength $\sigma_2$ of the metal plate and the tensile strength $\sigma_0$ of the fiber reinforced resin layer satisfy the above condition, a battery protection bottom plate with excellent impact resistance and corrosion resistance is obtained.

## BRIEF DESCRIPTION OF THE DRAWINGS

FIG. 1 is a schematic structural diagram of a battery protection bottom plate according to the present disclosure;
FIG. 2 is a schematic structural diagram of different first fiber reinforced prepreg unidirectional tapes in a protective layer according to the present disclosure;
FIG. 3 is a schematic structural diagram of different first fiber woven fabric reinforced prepregs in a protective layer according to the present disclosure;
FIG. 4 is a schematic structural diagram of a battery pack composite protection structure according to the present disclosure;
FIG. 5 is a schematic enlarged view of a part A of FIG. 4;
FIG. 6 is a schematic sectional view of a bottom of a battery pack composite protection structure according to an embodiment of the present disclosure;
FIG. 7 is a schematic sectional view of a bottom of a battery pack composite protection structure according to another embodiment of the present disclosure; and
FIG. 8 is a schematic sectional view of a bottom of a battery pack composite protection structure according to still another embodiment of the present disclosure.

In the drawings:
1. Battery protection bottom plate; 11. Protective layer; 111. First fiber reinforced prepreg unidirectional tape; 112. First fiber woven fabric reinforced prepreg; 12. Metal plate; 13. Fiber reinforced resin frame; 14. Fiber reinforced resin layer; 15. Mounting hole; 2. Buffer layer; 3. Battery pack; 31. Tray; 4. Buffer zone.

## DETAILED DESCRIPTION

To make the to-be-solved technical problems, technical solutions and beneficial effects of the present disclosure clearer, the present disclosure is further described in detail below with reference to accompanying drawings and embodiments. It should be understood that the specific embodiments described herein are merely used to explain the present disclosure but are not intended to limit the present disclosure.

In the description of the present disclosure, it should be understood that orientation or position relationships indicated by the terms such as "upper", "lower", "top", "bottom", "inner" and "outer" are based on orientation or position relationships shown in the accompanying drawings, and are merely for ease of description of the present disclosure and simplification of the description, rather than indicating or implying that the apparatus or element referred to needs to have a specific orientation or be constructed and operated in a specific orientation, and therefore cannot be construed as limiting the present disclosure. In the description of the present disclosure, unless otherwise stated, "a plurality of/multiple" means two or more.

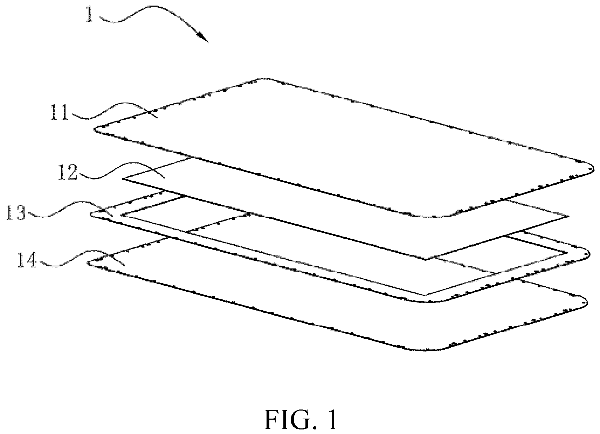

As shown in FIG. 1, an embodiment of the present disclosure provides a battery protection bottom plate 1, including a protective layer 11, a metal plate 12, and a fiber reinforced resin layer 14. The metal plate 12 is located between the protective layer 11 and the fiber reinforced resin layer 14, and the metal plate 12 and the fiber reinforced resin layer 14 satisfy the following condition:

$$0.4 \leq \frac{d1}{d2} * e^{-\frac{\varepsilon_0 * \sigma_2}{\sigma_0 * \varepsilon_2} + 0.5} \leq 2.0 \,,$$

where di is a thickness of the fiber reinforced resin layer 14 in mm;
$d_2$ is a thickness of the metal plate 12 in mm;
$\varepsilon_2$ is an elongation at break of the metal plate 12;
$\sigma_2$ is a tensile strength of the metal plate 12 in MPa;
$\varepsilon_0$ is an elongation at break of the fiber reinforced resin layer 14; and
$\sigma_0$ is a tensile strength of the fiber reinforced resin layer 14 in MPa.

The fiber reinforced resin layer 14 as a bottom surface coating structure of the metal plate 12 can prevent the metal plate 12 from being in direct contact with air and external moisture, to protect the metal plate 12 against corrosion. In addition, a fiber reinforced resin has good mechanical strength, so that stiffness and strength of the metal plate 12 are effectively improved, and therefore the metal plate has higher impact resistance.

Further, the inventors have found that when fiber reinforced resin layers 14 are matched with metal plates 12, a battery protection bottom plate 1 with excellent impact resistance can be obtained in some matching groups, while the surface of a fiber reinforced resin layer 14 is damaged in some matching groups. Through further experiments, it is found that the tensile strength and the elongation at break of a selected fiber reinforced resin layer 14 need to have a certain corresponding relationship with the tensile strength and the elongation at break of the metal plate 12, so that adhesion between the fiber reinforced resin layer 14 and the metal plate 12 can be ensured without being damaged when the battery protection bottom plate 1 is impacted by external energy. With reference to the thicknesses of the fiber reinforced resin layer 14 and the metal plate 12, the following relationship is summarized:

$$0.4 \leq \frac{d1}{d2} * e^{-\frac{\varepsilon_0 * \sigma_2}{\sigma_0 * \varepsilon_2} + 0.5} \leq 2.0 .$$

When the thickness $d_i$ of the fiber reinforced resin layer 14, the thickness $d_2$ of the metal plate 12, the elongation $\varepsilon_2$ at break of the metal plate 12, the elongation $\varepsilon_0$ at break of the fiber reinforced resin layer 14, the tensile strength $\sigma_2$ of the metal plate 12 and the tensile strength $\sigma_0$ of the fiber reinforced resin layer 14 satisfy the above condition, a battery protection bottom plate 1 with excellent impact resistance and corrosion resistance is obtained.

In some embodiments, the metal plate 12 and the fiber reinforced resin layer 14 satisfy the following condition:

$$0.5 \leq \frac{d1}{d2} * e^{-\frac{\varepsilon_0 * \sigma_2}{\sigma_0 * \varepsilon_2} + 0.5} \leq 1.8 .$$

Through the definition of the above relationship, influences of material selection of the metal plate 12 and the fiber reinforced resin layer 14 on impact resistance of the battery pack 3 can be synthesized, which is beneficial to preventing the fiber reinforced resin layer 14 on the surface from dropping when the fiber reinforced resin layer is subjected to an external impact, ensuring corrosion resistance of the battery protection bottom plate 1 and prolonging the service life.

In some embodiments, the thickness $d_i$ of the fiber reinforced resin layer 14 ranges from 0.6 mm to 2.0 mm.

Specifically, the thickness $d_i$ of the fiber reinforced resin layer 14 may be 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.8 mm or 2.0 mm.

The thickness $d_i$ of the fiber reinforced resin layer 14 is related to corrosion resistance of the metal plate 12 to external air and water vapor, and affects a bonding strength with the metal plate 12 and an overall strength after the compounding with the metal plate 12. When the thickness $d_i$ of the fiber reinforced resin layer 14 is in the above range, the dropping from the surface of the metal plate 12 can be prevented under a high-energy impact, and anti-corrosion and strength enhancement effects on the metal plate 12 can be effectively maintained.

In some embodiments, the thickness $d_2$ of the metal plate 12 ranges from 0.7 mm to 1.6 mm.

Specifically, the thickness $d_2$ of the metal plate 12 may be 0.7 mm, 0.8 mm, 0.9 mm, 1.0 mm, 1.1 mm, 1.2 mm, 1.3 mm, 1.4 mm, 1.5 mm or 1.6 mm.

The thickness $d_2$ of the metal plate 12 affects the overall mechanical strength of the battery protection bottom plate 1. When the tensile strength of the metal plate 12 is constant, the protection strength thereof gradually increases as the thickness of the metal plate 12 increases, but a material cost thereof also gradually increases, and a ground clearance of a bottom of a vehicle is reduced. When the thickness $d_2$ of the metal plate 12 is within the above range, the overall mechanical strength of the battery protection bottom plate 1 can be ensured, the cost can be effectively controlled, a distance from a ground can be ensured, and lightweight control of the vehicle can be facilitated.

In some embodiments, the elongation $\varepsilon_2$ at break of the metal plate 12 ranges from 5% to 20%.

Specifically, the elongation $\varepsilon_2$ at break of the metal plate 12 may be 5%, 6%, 7%, 8%, 9%, 10%, 11%, 12%, 13%, 14%, 15%, 16%, 17%, 18%, 19% or 20%.

In some embodiments, the tensile strength $\sigma_2$ of the metal plate 12 ranges from 590 MPa to 1180 MPa.

Specifically, the tensile strength $\sigma_2$ of the metal plate 12 may be 590 MPa, 600 MPa, 650 MPa, 700 MPa, 750 MPa, 800 MPa, 850 MPa, 900 MPa, 950 MPa, 1000 MPa or 1180 MPa.

The tensile strength $\sigma_2$ and the elongation $\varepsilon_2$ at break of the metal plate 12 may be tested by GB/T 228.1---2010 Metallic materials---Tensile testing---Part 1: Method of test at room temperature. The metal plate 12 as a component playing a major protective role in the battery protection bottom plate 1 is faced with complicated impact conditions, and the tensile strength $\sigma_2$ thereof as a strength index of the metal plate 12 affects deformation resistance of the metal plate 12 within an elastic deformation range of the metal plate. When the tensile strength $\sigma_2$ is higher, the metal plate 12 can resist a higher impact without irreversible deformation. The elongation $\varepsilon_2$ at break affects fracture resistance of the metal plate 12 after deformation. When the elongation $\varepsilon_2$ at break is higher, the metal plate 12 can resist a higher impact without cracking. However, generally, a higher tensile strength $\sigma_2$ of the metal plate 12 indicates a lower elongation $\varepsilon_2$ at break thereof. When the tensile strength $\sigma_2$ and the elongation $\varepsilon_2$ at break are within the above ranges, influences of different parameters on protective performance of the metal plate 12 can be effectively considered, and the impact resistance strength and cracking resistance of the metal plate 12 can be ensured.

In some embodiments, the elongation $\varepsilon_0$ at break of the fiber reinforced resin layer 14 ranges from 2.5% to 8%.

Specifically, the elongation $\varepsilon_0$ at break of the fiber reinforced resin layer 14 may be 2.5%, 2.6%, 2.8%, 2.9%, 3.0%, 3.1%, 3.2%, 3.3%, 3.4%, 3.5%, 3.6%, 3.8%, 3.9%, 4%, 4.5%, 5%, 5.5%, 6%, 6.5%, 7%, 7.5% or 8%.

In some embodiments, the tensile strength $\sigma_0$ of the fiber reinforced resin layer 14 ranges from 240 MPa to 380 MPa.

Specifically, the tensile strength $\sigma_0$ of the fiber reinforced resin layer 14 may be 240 MPa, 260 MPa, 280 MPa, 290 MPa, 300 MPa, 310 MPa, 320 MPa, 330 MPa, 340 MPa, 350 MPa, 360 MPa, 370 MPa or 380 MPa.

The elongation $\varepsilon_0$ at break of the fiber reinforced resin layer 14 and the tensile strength $\sigma_0$ of the fiber reinforced resin layer 14 may be tested by GB/T 1447-2005 Fiber-reinforced plastics composites---Determination of tensile properties. Type I samples are suitable for fiber reinforced thermoplastic plates, and samples are manufactured according to type I samples specified in the national standard for testing. When impacted, the fiber reinforced resin layer 14 is a surface layer of the battery protection bottom plate 1 that is in direct contact with an impacting object, and the improvement of the tensile strength $\sigma_0$ is beneficial to improving the deformation resistance of the fiber reinforced resin layer 14. The increase of the tensile strength $\sigma_0$ may lead to the decrease of the elongation $\varepsilon_0$ at break, and affect adhesion of the fiber reinforced resin layer 14 to the metal plate 12, resulting in delamination under the impact. When the tensile strength $\sigma_0$ and the elongation $\varepsilon_0$ at break of the fiber reinforced resin layer 14 are within the above ranges, the fiber reinforced resin layer 14 can effectively resist an external impact without delamination or dropping.

In practical applications, the above six parameters are interrelated and inseparable in terms of improving the impact resistance of the battery pack 3 and avoiding chalking and dropping of the fiber reinforced resin layer. For example, when the tensile strength $\sigma_2$ of the metal plate 12 cannot be well matched with the tensile strength $\sigma_0$ of the fiber reinforced resin layer 14, unsynchronized vibration is easily caused, which is more likely to cause delamination. When the elongation $\varepsilon_2$ at break of the metal plate 12 cannot be well matched with the elongation $\varepsilon_0$ at break of the fiber reinforced resin layer 14, the fiber reinforced resin layer 14 is susceptible to chalking due to an impact. The tensile strength $\sigma_2$ of the metal plate 12 is related to the elongation $\varepsilon_2$ at break of the metal plate 12, and the tensile strength $\sigma_0$ of the fiber reinforced resin layer 14 is related to the elongation $\varepsilon_0$ at break of the fiber reinforced resin layer 14. When the thickness $d_2$ of the metal plate 12 and the thickness di of the fiber reinforced resin layer 14 increase, requirements for the tensile strength $\sigma_2$ of the metal plate 12 and the tensile strength $\sigma_0$ of the fiber reinforced resin layer 14 can be reduced, but correspondingly, the total mass and thickness of the battery protection bottom plate 1 are increased. This is not conducive to satisfying requirements for lightweight and cost control of the vehicle, and also leads to the reduction of the distance between the vehicle and the ground. This is not beneficial to satisfying lightweight requirements for the vehicle and controlling costs, and leads to the reduction of the ground clearance of the vehicle. Therefore, through the relationship

$$0.4 \le \frac{d1}{d2} * e^{-\frac{\varepsilon_0 * \sigma_2}{\sigma_0 * \varepsilon_2} + 0.5} \le 2.0,$$

an influence of each of factors on protective performance of battery pack 3 is synthesized, which is beneficial to improving impact resistance of the battery protection bottom plate 1 and avoids delamination and surface chalking under an impact.

In some embodiments, a material of the protective layer 11 is selected from a fiber reinforced resin material, a resin coating or an electrophoretic coating. The protective layer 11 is configured to improve corrosion resistance and composite strength of the metal plate 12.

In some embodiments, the thickness of the protective layer 11 ranges from 0.4 mm to 1.6 mm. Specifically, the thickness of the protective layer 11 may be 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm or 1.6 mm. The thickness of the protective layer 11 mainly affects water vapor penetration resistance and the bonding strength of the protective layer 11 with the metal plate 12. When the thickness of the protective layer 11 is in the above range, the protective performance for the metal plate 12 can be effectively improved, and the bonding strength of the protective layer 11 with the metal plate 12 can be improved.

In some embodiments, the battery protection bottom plate 1 further includes a fiber reinforced resin frame 13. The metal plate 12 and the fiber reinforced resin frame 13 are located between the protective layer 11 and the fiber reinforced resin layer 14, and the metal plate 12 is located inside the fiber reinforced resin frame 13. A top surface of the fiber reinforced resin frame 13 is integrally connected to the protective layer 11, and a bottom surface of the fiber reinforced resin frame 13 is integrally connected to the fiber reinforced resin layer 14.

The fiber reinforced resin frame 13 is arranged on a periphery of the metal plate 12 as a frame connection transition member for the protective layer 11 and the fiber reinforced resin layer 14. This can effectively offset an influence of the thickness of the metal plate 12 on frame connection for the protective layer 11 and the fiber reinforced resin layer 14, ensure the strength of a frame of the battery protection bottom plate 1, further facilitate use of the frame of the battery protection bottom plate 1 as a mounting structure of the battery protection bottom plate on a battery, and improve impact resistance of the battery protection bottom plate.

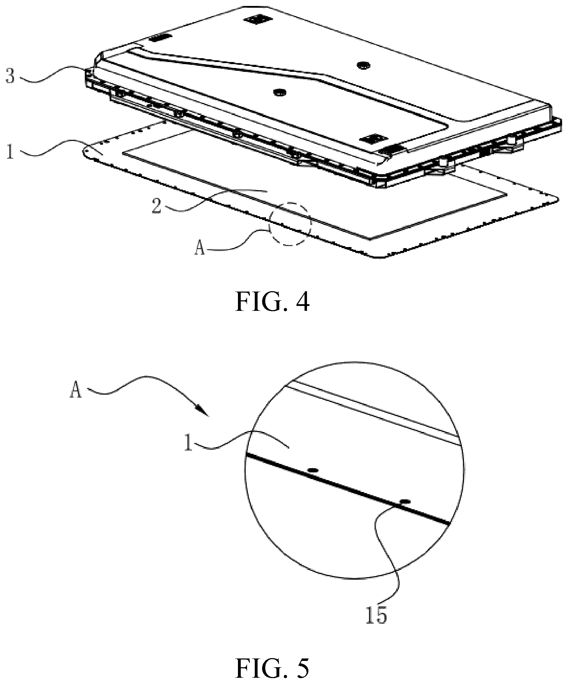

As shown in FIG. 4 and FIG. 5, in some embodiments, multiple mounting holes 15 are spaced away in an inner side of an edge of the battery protection bottom plate 1, and the mounting holes 15 sequentially run through the protective layer 11, the fiber reinforced resin frame 13 and the fiber reinforced resin layer 14.

The mounting holes 15 are configured to mount and fasten the battery protection bottom plate 1 to a bottom of the battery pack 3. The mounting holes 15 are provided in the inner side of the edge of the battery protection bottom plate 1 and sequentially run through the protective layer 11, the fiber reinforced resin frame 13 and the fiber reinforced resin layer 14, so that the mounting holes 15 can be prevented from running through the metal plate 12, and the corrosion problem caused by the exposure of the metal plate 12 at the mounting holes 15 can be avoided. In addition, the fiber reinforced resin frame 13 is beneficial to improving the overall thickness and tensile shear strength of a mounting position, and has sufficient mounting stability.

The multiple mounting holes 15 are provided around the periphery of the metal plate 12, so as to uniformly disperse a top gravity and a bottom impact force on the metal plate 12.

Specifically, during mounting, a connection member is provided to pass through the mounting hole 15 to secure the battery protection bottom plate 1 to the bottom of the battery pack 3. The connection member is a rivet, a screw or a bolt.

In different embodiments, resins of the protective layer 11, the fiber reinforced resin frame 13 and the fiber reinforced resin layer 14 each are independently selected from thermosetting and/or thermoplastic materials. Examples may include, but are not limited to, an epoxy resin, phenolic plastic, phenols, cyanate esters, imides (such as polyimide, bismaleimide (BMI) and polyetherimide), polypropylenes, polyesters, benzoxazines, polybenzimidazoles, polybenzothiazoles, polyamides, polyamideimides, polysulfones, polyethersulfones, polycarbonates, polyethylene terephthalates and polyether ketones (such as polyether ketone (PEK), polyetheretherketone (PEEK) and polyether ketone ketone (PEKK)), and a combination thereof.

In different embodiments, fibers of the protective layer 11, the fiber reinforced resin frame 13 and the fiber reinforced resin layer 14 each are independently selected from a glass fiber, an aramid fiber, a carbon fiber, a graphite fiber, a boron fiber, an aromatic polyamide fiber and a mixture thereof.

The fibers of the protective layer 11, the fiber reinforced resin frame 13 and the fiber reinforced resin layer 14 may be embedded in resins in the form of chopped fibers, long-cut fibers, nonwoven fabrics, unidirectional reinforced fiber base materials, woven fabrics, and the like.

In some embodiments, the protective layer 11, the fiber reinforced resin frame 13 and the fiber reinforced resin layer 14 each are independently selected from a glass fiber reinforced polyamide resin member, a glass fiber reinforced polypropylene resin member, a glass fiber reinforced polyethylene resin member, a glass fiber reinforced polycarbonate resin member or a glass fiber reinforced polystyrene resin member.

In some embodiments, the protective layer 11, the fiber reinforced resin frame 13 and the fiber reinforced resin layer 14 are made of a same resin material, and the same resin material can ensure affinity of materials between different layers, thereby ensuring an integration degree of combination between different layers and improving the overall strength.

In some embodiments, the protective layer 11, the fiber reinforced resin frame 13 and the fiber reinforced resin layer 14 each are a glass fiber reinforced resin member, and the glass fiber reinforced resin member contains a glass fiber with a content ranging from 60% to 70%, which is beneficial to improving the material strength of the protective layer 11, the fiber reinforced resin frame 13 and the fiber reinforced resin layer 14.

In some embodiments, the alkali content of the glass fiber is less than 0.8%.

When the alkali content of the glass fiber is less than 0.8%, aging resistance of the protective layer 11, the fiber reinforced resin frame 13 and the fiber reinforced resin layer 14 are improved, and performance attenuation of the material after long-term use is slowed down.

In some embodiments, the glass fiber is selected from an E-glass fiber or an S-glass fiber.

In some embodiments, the protective layer 11 includes multiple layers of first fiber reinforced prepregs stacked with each other.

In some embodiments, the fiber reinforced resin frame 13 includes multiple layers of second fiber reinforced prepregs stacked with each other.

In some embodiments, the fiber reinforced resin layer 14 includes multiple layers of third fiber reinforced prepregs stacked with each other.

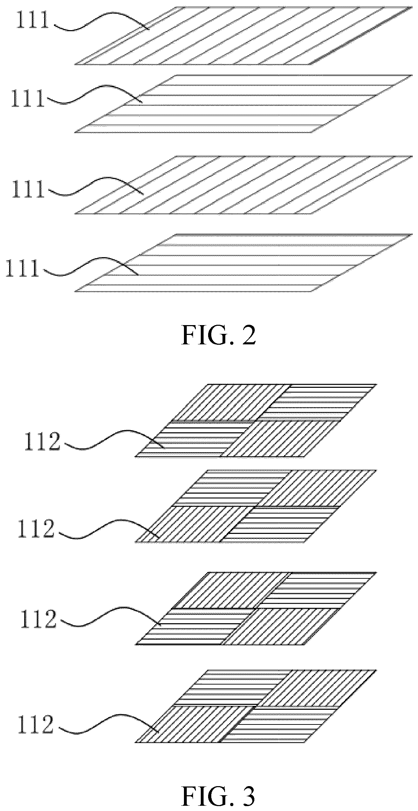

As shown in FIG. 2, in an embodiment, the protective layer 11 includes multiple layers of first fiber reinforced prepreg unidirectional tapes 111 stacked with each other. Fiber arrangement directions of two adjacent layers of first fiber reinforced prepreg unidirectional tapes 111 are staggered at approximately 90°, and an allowable ply angle deviation range of two adjacent layers of first fiber reinforced prepreg unidirectional tapes 111 is ±20°.

Fibers of each first fiber reinforced prepreg unidirectional tape 111 are provided unidirectionally, and when subjected to a tensile force along a fiber extension direction, the fibers of the first fiber reinforced prepreg unidirectional tape 111 can effectively bear the tensile force. Stress uniformity of the protective layer 11 in each direction is improved by staggering fiber arrangement directions of adjacent first fiber reinforced prepreg unidirectional tapes 111 at approximately 90°.

The fiber reinforced resin frame 13 includes multiple layers of second fiber reinforced prepreg unidirectional tapes stacked with each other. Fibers of each second fiber reinforced prepreg unidirectional tape are unidirectionally arranged. Fiber arrangement directions of two adjacent layers of second fiber reinforced prepreg unidirectional tapes are staggered at approximately 90°, and an allowable ply angle deviation range of two adjacent layers of second fiber reinforced prepreg unidirectional tapes is ±20°.

The fiber reinforced resin layer 14 includes multiple layers of third fiber reinforced prepreg unidirectional tapes stacked with each other. Fibers of each third fiber reinforced prepreg unidirectional tape are unidirectionally arranged. Fiber arrangement directions of two adjacent layers of third fiber reinforced prepreg unidirectional tapes are staggered at approximately 90°, and an allowable ply angle deviation range of two adjacent layers of third fiber reinforced prepreg unidirectional tapes is ±20°.

Fiber arrangements of the fiber reinforced resin frame 13 and the fiber reinforced resin layer 14 are similar to those of the protective layer 11, and details are not repeated.

As shown in FIG. 3, in another embodiment, the protective layer 11 includes multiple layers of first fiber woven fabric reinforced prepregs 112 stacked with each other, and fibers of each first fiber woven fabric reinforced prepreg 112 form a woven fabric in a staggered form.

The fiber reinforced resin frame 13 includes multiple layers of second fiber woven fabric reinforced prepregs stacked with each other, and fibers of each second fiber woven fabric reinforced prepreg form a woven fabric in a staggered form.

The fiber reinforced resin layer 14 includes multiple layers of third fiber woven fabric reinforced prepregs stacked with each other, and fibers of each third fiber woven fabric reinforced prepreg form a woven fabric in a staggered form.

In some embodiments, the metal plate 12 is selected from iron and an alloy thereof, aluminum and an alloy thereof, magnesium and an alloy thereof, copper and an alloy thereof, titanium and an alloy thereof or nickel and an alloy thereof.

In an embodiment, the metal plate 12 is a steel plate, and a galvanized layer, a galvanized iron alloy layer or an electrophoretic paint protective layer is arranged at an outer surface of the steel plate.

Compared with other metal materials, the steel plate used as the metal plate 12 has a better tensile strength and elongation, can satisfy requirements for impact resistance, and is beneficial to improving a protective effect on the battery pack 3.

The galvanized layer, the galvanized iron alloy layer or the electrophoretic paint protective layer is arranged at the outer surface of the steel plate, to improve corrosion resistance of the steel plate. When the protective layer 11 or the fiber reinforced resin layer 14 is damaged, a galvanic effect formed by the galvanized layer or the galvanized iron alloy layer and the steel plate causes the galvanized layer or the galvanized iron alloy layer to corrode prior to the steel plate, thereby achieving a protective effect on the steel plate. The electrophoretic paint protective layer has good adhesion and can effectively isolate the steel plate from an external environment.

As shown in FIG. 4 and FIG. 6 to FIG. 8, another embodiment of the present disclosure provides a battery pack composite protection structure, including a battery pack 3 and the battery protection bottom plate 1 as described above. The battery protection bottom plate 1 is arranged below the battery pack 3, and a buffer zone 4 is formed between the battery pack 3 and the battery protection bottom plate 1.

Due to the adoption of the above battery protection bottom plate 1, the battery pack composite protection structure effectively ensures the protection strength and good corrosion resistance of the battery protection bottom plate 1 while a lower overall thickness is ensured.

In some embodiments, the battery pack 3 includes a tray 31 and a battery arranged on the tray 31.

In different embodiments, the buffer zone 4 may be provided between the battery pack 3 and the battery protection bottom plate 1 in different ways.

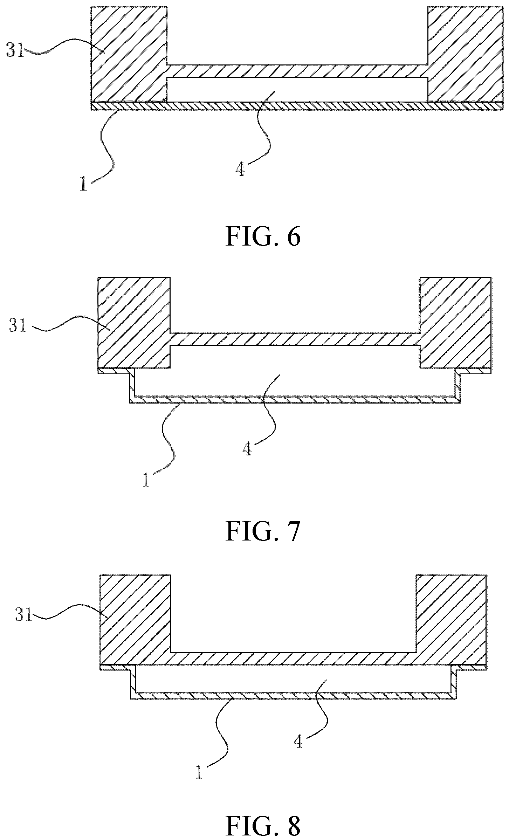

As shown in FIG. 6, in an embodiment, a bottom surface of the tray 31 is provided with a groove inward to form the buffer zone 4, and the battery protection bottom plate 1 is in a shape of a flat plate. The battery protection bottom plate 1 covers the buffer zone 4.

As shown in FIG. 7, in an embodiment, the frame of the battery protection bottom plate 1 is connected to the bottom surface of the tray 31, and the bottom surface of the tray 31 is internally provided with a groove. The battery protection bottom plate 1 protrudes in a direction facing away from the tray 31 to form the buffer zone 4 between the tray 31 and the battery protection bottom plate 1.

As shown in FIG. 8, in an embodiment, the frame of the battery protection bottom plate 1 is connected to the bottom surface of the tray 31, and the bottom surface of the tray 31 is a flat surface. The battery protection bottom plate 1 protrudes in a direction facing away from the tray 31 to form the buffer zone 4 between the tray 31 and the battery protection bottom plate 1.

In some embodiments, the buffer zone 4 is filled with a buffer layer 2, and the buffer layer 2 is selected from a honeycomb material or a rigid foam material.

The honeycomb material or the rigid foam material can absorb a collapse deformation space of the battery protection bottom plate under an external strong impact, buffer and absorb part of energy of the external strong impact, and prevent compression deformation of the battery protection bottom plate 1 from impacting on internal battery cores of the battery pack 3, thereby further protecting the battery pack 3.

In some embodiments, the honeycomb material is selected from a polypropylene (PP) honeycomb material or an aluminum honeycomb material; and the rigid foam material is selected from a polyurethane (PU) rigid foam material, a polyethylene terephthalate (PET) rigid foam material, a polymethacrylimide (PMI) rigid foam material, a polyvinyl chloride (PVC) rigid foam material, a polyethylene terephthalate (PET) rigid foam material, a modified polypropylene (MPP) rigid foam material, a polylactic acid (PLA) rigid foam material, a polyimide (PI) rigid foam material or an enhanced thermoplastic polyurethane (EPTU) rigid foam material.

Another embodiment of the present disclosure provides a vehicle, including the battery protection bottom plate or the battery pack composite protection structure as described above.

The present disclosure is further described below by embodiments.

Table 1

| | Thickness $d_1$/mm of a fiber reinforced resin layer | Thickness $d_2$/mm of a metal plate | Elongation $\varepsilon_2$ at break of the metal plate | Tensile strength $\sigma_2$/MPa of the metal plate | Elongation $\varepsilon_0$ at break of the fiber reinforced resin layer | Tensile strength $\sigma_2$/MPa of the fiber reinforced resin layer | $\dfrac{d1}{d2}*e^{-\frac{\varepsilon_0*\sigma_2}{\sigma_0*\varepsilon_2}}+0.5$ |
|---|---|---|---|---|---|---|---|
| Embodiment 1 | 1.6 | 1.2 | 18% | 780 | 3% | 380 | 1.56 |
| Embodiment 2 | 1.6 | 1.2 | 18% | 780 | 4% | 300 | 1.23 |
| Embodiment 3 | 1.6 | 1.2 | 18% | 780 | 7% | 240 | 0.62 |
| Embodiment 4 | 1.6 | 1.2 | 18% | 780 | 6% | 340 | 1.02 |
| Embodiment 5 | 1.6 | 0.8 | 18% | 780 | 6% | 340 | 1.53 |
| Embodiment 6 | 1.6 | 0.7 | 18% | 780 | 6% | 300 | 1.58 |
| Embodiment 7 | 1.2 | 0.8 | 18% | 780 | 6% | 300 | 1.04 |
| Embodiment 8 | 0.8 | 0.8 | 18% | 780 | 6% | 300 | 0.69 |
| Embodiment 9 | 1 | 0.8 | 18% | 780 | 3% | 380 | 1.46 |
| Embodiment 10 | 1 | 0.8 | 20% | 590 | 3% | 380 | 1.63 |
| Embodiment 11 | 1 | 0.8 | 23% | 560 | 3% | 380 | 1.70 |

(continued)

| | Thickness $d_1$/mm of a fiber reinforced resin layer | Thickness $d_2$/mm of a metal plate | Elongation $\varepsilon_2$ at break of the metal plate | Tensile strength $\sigma_2$/MPa of the metal plate | Elongation $\varepsilon_0$ at break of the fiber reinforced resin layer | Tensile strength $\sigma_2$/MPa of the fiber reinforced resin layer | $\dfrac{d1}{d2} * e^{-\frac{\varepsilon_0 * \sigma_2}{\sigma_0 * \varepsilon_2}} + 0.5$ |
|---|---|---|---|---|---|---|---|
| Embodiment 12 | 1.6 | 1.2 | 18% | 780 | 8% | 220 | 0.45 |
| Embodiment 13 | 1.6 | 0.6 | 18% | 780 | 6% | 300 | 1.85 |
| Embodiment 14 | 2 | 0.8 | 18% | 780 | 6% | 340 | 1.92 |
| Embodiment 15 | 0.6 | 0.8 | 18% | 780 | 6% | 280 | 0.49 |
| Embodiment 16 | 1 | 0.8 | 6% | 1180 | 3% | 380 | 0.44 |
| Embodiment 17 | 0.5 | 0.7 | 18% | 780 | 6% | 340 | 0.55 |
| Embodiment 18 | 2.1 | 1.2 | 18% | 780 | 6% | 340 | 1.34 |
| Embodiment 19 | 1.6 | 1.2 | 18% | 780 | 2% | 405 | 1.77 |
| Embodiment 20 | 2 | 0.8 | 18% | 780 | 9% | 200 | 0.59 |
| Comparative Example 1 | 2 | 0.8 | 6% | 1180 | 6% | 340 | 0.13 |
| Comparative Example 2 | 2 | 1 | 20% | 560 | 6% | 340 | 2.01 |
| Comparative Example 3 | 0.6 | 1.2 | 18% | 780 | 6% | 340 | 0.38 |
| Comparative Example 4 | 1.6 | 0.8 | 12% | 450 | 4% | 360 | 2.17 |
| Comparative Example 5 | 2.2 | 0.8 | 18% | 780 | 6% | 340 | 2.11 |

Embodiment 1

This embodiment is used to illustrate a battery pack composite protection structure according to the present disclosure, which includes a battery pack, a buffer layer and a battery protection bottom plate. The battery protection bottom plate includes a metal plate, a protective layer, a fiber reinforced resin frame and a fiber reinforced resin layer. The metal plate is a galvanized steel plate. The protective layer is made of a fiber reinforced resin material. The metal plate is located between the protective layer and the fiber reinforced resin layer. The fiber reinforced resin layer is located below the metal plate, and the metal plate is located inside the fiber reinforced resin frame. A top surface of the fiber reinforced resin frame is integrally connected to the protective layer, and a bottom surface of the fiber reinforced resin frame is integrally connected to the fiber reinforced resin layer. The battery protection bottom plate is arranged below the battery pack, and a buffer zone is formed between the battery pack and the battery protection bottom plate. The buffer zone is filled with the buffer layer, and a frame of the battery protection bottom plate is mounted to a bottom frame of the battery pack by a rivet.

The thickness di of the fiber reinforced resin layer is 1.6 mm. The thickness of the protective layer is 1.5 mm. The thickness $d_2$ of the metal plate is 1.2 mm. The elongation $\varepsilon_2$ at break of the metal plate is 18%, and the elongation $\varepsilon_0$ at break

of the fiber reinforced resin layer is 3%. The tensile strength $\sigma_2$ of the metal plate is 780 MPa, and the tensile strength $\sigma_0$ of the fiber reinforced resin layer is 380 MPa.

Embodiments 2 to 20

Embodiments 2 to 20 are used to illustrate a battery pack composite protection structure according to the present disclosure, which includes most of the structures in Embodiment 1, but differs in that:

the metal plate and the fiber reinforced resin layer provided in each of Embodiments 2 to 20 in Table 1 are used.

Comparative Examples 1 to 5

Comparative Examples 1 to 5 are used to comparatively illustrate a battery pack composite protection structure according to the present disclosure, which includes most of the structures in Embodiment 1, but differs in that:

the metal plate and the fiber reinforced resin layer provided in each of Comparative Examples 1 to 5 in Table 1 are used.

Performance testing

Performance of the battery pack composite protection structures according to the above embodiments and comparative examples was tested as follows:

1. A ball was used as an impact head to impact on a battery protection bottom plate of each battery pack composite protection structure, so as to simulate a working condition that a bottom of a whole vehicle is impacted by a foreign object. The ball had a diameter of 25 mm, a weight of 10 kg, impact energy of 300 J and an impact speed of 8.5 m/s. A center point of the battery protection bottom plate and four points on a periphery of the center point were selected as impact points to impact for five times.

A dent deformation amount of a battery pack tray at each impact point was measured, and an impact point with a maximum dent deformation amount was selected and denoted as a dent deformation amount of a battery pack tray. Generally, it is required that the dent amount of the 300 J energy impact is not greater than 3 mm.

A vernier caliper was used to measure the diameter of a chalked area of the battery protection bottom plate after the battery protection bottom plate was impacted. Each single impact point was repeatedly measured for three times to determine an average value. An impact point with the largest diameter of the chalked area was selected and denoted as the chalking diameter of the fiber reinforced resin layer as a surface layer. The chalking degree grading standard is as follows.

R1: The chalking diameter of the fiber reinforced resin layer as the surface layer is less than 2 mm, and no metal plate is exposed;
R2: the chalking diameter of the fiber reinforced resin layer as the surface layer is less than 5 mm, and no metal plate is exposed;
R3: The chalking diameter of the fiber reinforced resin layer as the surface layer is less than 8 mm, and no metal plate is exposed;
R4: the chalking diameter of the fiber reinforced resin layer as the surface layer is less than 10 mm, and no metal plate is exposed;
R5: the chalked diameter of the fiber reinforced resin layer is greater than 10 mm, and it can be seen that the metal plate is exposed.

2. The battery pack composite protection structure was mounted on a vibration table to perform 300,000 kilometer mileage simulation vibration so as to check whether a joint was damaged after vibration and whether the battery protection bottom plate was delaminated.

300,000 kilometer mileage simulation vibration test: According to requirements of GB/T 2423.43, a test object was mounted on the vibration table, and a torque at each mounting point was tested and recorded. The vibration test was performed in three directions. For the test process, refer to GB/T 2423.56, with specific test conditions as follows:

Firstly, random vibration was performed in a Z direction for 21 h (with random vibration conditions shown in Table 2), and then vibration was performed at a fixed frequency in the Z direction for 1 h (fixed frequency vibration conditions: fixed frequency of 24 Hz, and fixed frequency amplitude of 1 g).
Secondly, random vibration was performed in a Y direction for 21 h (with random vibration conditions shown in Table 2), and then vibration was performed at a fixed frequency in the Y direction for 1 h (fixed frequency vibration conditions:

fixed frequency of 24 Hz, and fixed frequency amplitude of 1 g).

Furthermore, random vibration was performed in an X direction for 21 h (with random vibration conditions shown in Table 2), and then vibration was performed at a fixed frequency in the X direction for 1 h (fixed frequency vibration conditions: fixed frequency of 24 Hz, and fixed frequency amplitude of 1 g).

PSD stands for power spectral density, representing a power spectral density of vibration at a frequency. An r.m.s. value represents a comprehensive acceleration of vibration, and feeds back vibration intensity.

Table 2 Random vibration test

| X direction | | Y direction | | Z direction | |
|---|---|---|---|---|---|
| Frequency Hz | PSD $g^2$/Hz | Frequency Hz | PSD $g^2$/Hz | Frequency Hz | PSD $g^2$/Hz |
| 5 | 0.005 | 5 | 0.002 | 5 | 0.012 |
| 11.5 | 0.005 | 10 | 0.004 | 9.5 | 0.012 |
| 13 | 0.01726 | 14 | 0.01206 | 11 | 0.0198 |
| 21.5 | 0.005 | 34 | 0.001751 | 78 | 0.1193 |
| 30 | 0.005 | 40 | 0.00857 | 80 | 0.0009 |
| 35 | 0.0032 | 46 | 0.001 | 100 | 0.0009 |
| 38 | 0.008383 | 74 | 0.0008782 | 200 | 0.00006 |
| 48 | 0.00132 | 77 | 0.0005 | | |
| 67 | 0.000478 | 200 | 0.00012 | | |
| 76 | 0.003525 | | | | |
| 84 | 0.00026 | | | | |
| 200 | 0.00002 | | | | |
| r.m.s. value | 0.54 g | r.m.s. value | 0.49 g | r.m.s. value | 0.64 g |
| Time | 21h | Time | 21 h | Time | 21 h |

Obtained test results were filled in Table 3.

Table 3

| | Dent deformation amount of the battery pack tray < 3 mm | Chalking degree of the fiber reinforced resin layer after ball impact | Whether the j oint is damaged after 300,000 kilometer mileage vibration, and whether bonding delamination occurs |
|---|---|---|---|
| Embodiment 1 | 1.3 | R2 | No |
| Embodiment 2 | 1.5 | R1 | No |
| Embodiment 3 | 1.8 | R1 | No |
| Embodiment 4 | 1.9 | R1 | No |
| Embodiment 5 | 2.4 | R2 | No |
| Embodiment 6 | 2.6 | R2 | No |
| Embodiment 7 | 2.4 | R2 | No |
| Embodiment 8 | 2.6 | R2 | No |
| Embodiment 9 | 2.2 | R2 | No |
| Embodiment 10 | 2.6 | R2 | No |
| Embodiment 11 | 2.8 | R2 | No |
| Embodiment 12 | 2 | R4 | No |

(continued)

|  | Dent deformation amount of the battery pack tray < 3 mm | Chalking degree of the fiber reinforced resin layer after ball impact | Whether the j oint is damaged after 300,000 kilometer mileage vibration, and whether bonding delamination occurs |
|---|---|---|---|
| Embodiment 13 | 2.8 | R4 | No |
| Embodiment 14 | 2.3 | R4 | No |
| Embodiment 15 | 2.9 | R1 | No |
| Embodiment 16 | 2.6 | R4 | No |
| Embodiment 17 | 2.8 | R1 | No |
| Embodiment 18 | 1.6 | R4 | No |
| Embodiment 19 | 1.4 | R4 | No |
| Embodiment 20 | 2.7 | R4 | No |
| Comparative Example 1 | 3.6 | R5 | No |
| Comparative Example 2 | 3.2 | R5 | No |
| Comparative Example 3 | 2 | R1 | Yes |
| Comparative Example 4 | 3.2 | R5 | No |
| Comparative Example 5 | 2.2 | R5 | No |

As can be seen from test results in Table 3, when the thickness di of the fiber reinforced resin layer, the thickness $d_2$ of the metal plate, the elongation $\varepsilon_2$ at break of the metal plate, the tensile strength $\sigma_2$ of the metal plate, the elongation $\varepsilon_0$ at break of the fiber reinforced resin layer and the tensile strength $\sigma_0$ of the fiber reinforced resin layer satisfy the condition

$$0.4 \le \frac{d1}{d2} * e^{-\frac{\varepsilon_0 * \sigma_2}{\sigma_0 * \varepsilon_2} + 0.5} \le 2.0 \,,$$

a battery protection bottom plate with excellent impact resistance is obtained, which can prevent the fiber reinforced resin layer on the surface of the metal plate from dropping under a long-term impact and improve corrosion resistance thereof.

The foregoing descriptions are merely preferred embodiments of the present disclosure, and are not intended to limit the present disclosure. Any modification, equivalent replacement, improvement, and the like made within the spirit and principle of the present disclosure shall fall within the protection scope of the present disclosure.

**Claims**

1. A battery protection bottom plate, comprising a protective layer (11), a metal plate (12) and a fiber reinforced resin layer (14), the metal plate (12) being located between the protective layer (11) and the fiber reinforced resin layer (14), and the metal plate (12) and the fiber reinforced resin layer (14) satisfying the following condition:

$$0.4 \le \frac{d1}{d2} * e^{-\frac{\varepsilon_0 * \sigma_2}{\sigma_0 * \varepsilon_2} + 0.5} \le 2.0 \,,$$

wherein di is a thickness of the fiber reinforced resin layer (14) in mm;
$d_2$ is a thickness of the metal plate (12) in mm;
$\varepsilon_2$ is an elongation at break of the metal plate (12);
$\sigma_2$ is a tensile strength of the metal plate (12) in MPa;
$\varepsilon_0$ is an elongation at break of the fiber reinforced resin layer (14); and

$\sigma_0$ is a tensile strength of the fiber reinforced resin layer (14) in MPa.

2. The battery protection bottom plate according to claim 1, wherein the metal plate (12) and the fiber reinforced resin layer (14) satisfy the following condition:

$$0.5 \leq \frac{d1}{d2} * e^{-\frac{\varepsilon_0 * \sigma_2}{\sigma_0 * \varepsilon_2} + 0.5} \leq 1.8 \; .$$

3. The battery protection bottom plate according to claim 1 or 2, wherein the thickness di of the fiber reinforced resin layer (14) ranges from 0.6 mm to 2.0 mm.

4. The battery protection bottom plate according to any one of claims 1 to 3, wherein the thickness $d_2$ of the metal plate (12) ranges from 0.7 mm to 1.6 mm.

5. The battery protection bottom plate according to any one of claims 1 to 4, wherein the elongation $\varepsilon_2$ at break of the metal plate (12) ranges from 5% to 20%.

6. The battery protection bottom plate according to any one of claims 1 to 5, wherein the tensile strength $\sigma_2$ of the metal plate (12) ranges from 590 MPa to 1180 MPa.

7. The battery protection bottom plate according to any one of claims 1 to 6, wherein the elongation $\varepsilon_0$ at break of the fiber reinforced resin layer (14) ranges from 2.5% to 8%.

8. The battery protection bottom plate according to any one of claims 1 to 7, wherein the tensile strength $\sigma_0$ of the fiber reinforced resin layer (14) ranges from 240 MPa to 380 MPa.

9. The battery protection bottom plate according to any one of claims 1 to 8, wherein a material of the protective layer (11) is selected from a fiber reinforced resin material, a resin coating or an electrophoretic coating.

10. The battery protection bottom plate according to any one of claims 1 to 9, wherein the thickness of the protective layer (11) ranges from 0.4 mm to 1.6 mm.

11. The battery protection bottom plate according to any one of claims 1 to 10, further comprising a fiber reinforced resin frame (13), the metal plate (12) and the fiber reinforced resin frame (13) being located between the protective layer (11) and the fiber reinforced resin layer (14), the metal plate (12) being located inside the fiber reinforced resin frame (13), a top surface of the fiber reinforced resin frame (13) being integrally connected to the protective layer (11), and a bottom surface of the fiber reinforced resin frame (13) being integrally connected to the fiber reinforced resin layer (14).

12. The battery protection bottom plate according to claim 11, wherein a plurality of mounting holes (15) are spaced away in an inner side of an edge of the battery protection bottom plate (1), and the mounting holes (15) sequentially run through the protective layer (11), the fiber reinforced resin frame (13) and the fiber reinforced resin layer (14).

13. The battery protection bottom plate according to claim 11 or 12, wherein the protective layer (11), the fiber reinforced resin frame (13) and the fiber reinforced resin layer (14) each are independently selected from a glass fiber reinforced polyamide resin member, a glass fiber reinforced polypropylene resin member, a glass fiber reinforced polyethylene resin member, a glass fiber reinforced polycarbonate resin member or a glass fiber reinforced polystyrene resin member.

14. The battery protection bottom plate according to claim 11 or 12, wherein the protective layer (11), the fiber reinforced resin frame (13) and the fiber reinforced resin layer (14) each are a glass fiber reinforced resin member, the glass fiber reinforced resin member contains a glass fiber with a content ranging from 60% to 70%, and the glass fiber has an alkali content less than 0.8%.

15. The battery protection bottom plate according to any one of claims 11 to 14, wherein the protective layer (11) comprises a plurality of layers of first fiber reinforced prepregs stacked with each other;

and/or the fiber reinforced resin frame (13) comprises a plurality of layers of second fiber reinforced prepregs stacked with each other;

and/or the fiber reinforced resin layer (14) comprises a plurality of layers of third fiber reinforced prepregs stacked with each other.

16. The battery protection bottom plate according to any one of claims 1 to 15, wherein the metal plate (12) is a steel plate, and a galvanized layer, a galvanized iron alloy layer or an electrophoretic paint protective layer is arranged at an outer surface of the steel plate.

17. A battery pack composite protection structure, comprising a battery pack (3) and the battery protection bottom plate (1) according to any one of claims 1 to 16, the battery protection bottom plate (1) being arranged below the battery pack (3), and a buffer zone (4) being formed between the battery pack (3) and the battery protection bottom plate (1).

18. The battery pack composite protection structure according to claim 17, wherein the buffer zone (4) is filled with a buffer layer (2), and the buffer layer (2) is selected from a honeycomb material or a rigid foam material.

19. A vehicle, comprising the battery protection bottom plate (1) according to any one of claims 1 to 16 or the battery pack composite protection structure according to claim 17 or 18.

1

11

12

13

14

FIG. 1

FIG. 2

FIG. 3

3

1

2

A

FIG. 4

A

1

15

FIG. 5

FIG. 6

FIG. 7

FIG. 8

## INTERNATIONAL SEARCH REPORT

| International application No. |
| --- |
| **PCT/CN2023/096818** |

**A.   CLASSIFICATION OF SUBJECT MATTER**

H01M 50/231(2021.01)i;   H01M 50/224(2021.01)i;   H01M 50/227(2021.01)i;   H01M 50/249(2021.01)i;   H01M 50/244(2021.01)i;   H01M 50/24(2021.01)i;   H01M 50/242(2021.01)i;   H01M 50/236(2021.01)i

According to International Patent Classification (IPC) or to both national classification and IPC

**B.   FIELDS SEARCHED**

Minimum documentation searched (classification system followed by classification symbols)

IPC:  H01M

Documentation searched other than minimum documentation to the extent that such documents are included in the fields searched

Electronic data base consulted during the international search (name of data base and, where practicable, search terms used)

CNABS; CNTXT; WPABS; DWPI; USTXT; EPTXT; WOTXT; ISI; CNKI: 比亚迪, 车, 电池, 钢板, 金属, 纤维, 护板, 抗拉强度, 拉伸强度, 伸长率, 延伸率, metal, fiber, tensile, strength, elongation

**C.   DOCUMENTS CONSIDERED TO BE RELEVANT**

| Category* | Citation of document, with indication, where appropriate, of the relevant passages | Relevant to claim No. |
| --- | --- | --- |
| X | WO 2017090676 A1 (MITSUBISHI PLASTICS INC.) 01 June 2017 (2017-06-01) description, paragraphs [0008]-[0137] | 1-19 |
| A | JP 2018183915 A (MITSUBISHI CHEMICAL CORPORATION) 22 November 2018 (2018-11-22) entire document | 1-19 |
| A | JP 2007090678 A (JFE STEEL K. K.) 12 April 2007 (2007-04-12) entire document | 1-19 |
| A | CN 215451600 U (BYD CO., LTD.) 07 January 2022 (2022-01-07) entire document | 1-19 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 July 2023** | **31 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/096818**

| Patent document cited in search report | | | Publication date (day/month/year) | Patent family member(s) | | | Publication date (day/month/year) |
|---|---|---|---|---|---|---|---|
| WO | 2017090676 | A1 | 01 June 2017 | JPWO | 2017090676 | A1 | 06 September 2018 |
| | | | | JP | 6717321 | B2 | 01 July 2020 |
| JP | 2018183915 | A | 22 November 2018 | JP | 6805951 | B2 | 23 December 2020 |
| JP | 2007090678 | A | 12 April 2007 | | None | | |
| CN | 215451600 | U | 07 January 2022 | | None | | |

Form PCT/ISA/210 (patent family annex) (July 2022)

**EP 4 481 919 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210612280